# EUROPEAN PATENT SPECIFICATION

(11) **EP 4 622 850 B1**
(45) Date of publication and mention of the grant of the patent: **13.05.2026**
(21) Application number: 23793476.5
(22) Date of filing: 06.10.2023
(51) Int. Cl.: B62J 9/23, E05F 1/12, E05D 11/06

(54) **EASY OPENING TOP CASE**
LEICHT ZU ÖFFNENDES OBERES ETUI
TOP-CASE À OUVERTURE FACILE

(30) Priority: 24.11.2022 IT 202200024231
(43) Date of publication of application: 01.10.2025
(73) Proprietor: PIAGGIO & C. S.p.A., 56025 Pontedera (PI) (IT)
(72) Inventor: CANDELO, Roberto, 56025 Pontedera (PI) (IT)
(74) Representative: Carangelo, Pierluigi
(86) International application number: PCT/IB2023/060047
(87) International publication number: WO 2024/110797

(56) References cited:
- WO-A1-2015/051941
- WO-A1-2022/167879
- CN-A- 110 027 650
- US-A1- 2015 184 429

## Description

### TECHNOLOGICAL FIELD

The present invention relates to the field of storage containers for motorcycles, in particular the field of rear top cases for motorcycles.

### BACKGROUND ART

The prior art comprises various known solutions for storing objects in a motorcycle.

Motorcycles, unlike motor cars, do not comprise a passenger compartment, therefore items must be stored in special compartments of the motorcycle. Generally, these compartments are impermeable to protect the items from weathering.

Motorcycle compartments can be small, e.g., to contain a pair of gloves or the vehicle documents, or large, e.g., to contain one or more helmets.

Traditional storage compartments are rear top cases for motorcycles and scooters or underseat compartments for scooters. For scooters, top cases placed in the front are also known.

Easy opening top cases, i.e., comprising elastic elements adapted to facilitate the opening of the top case, are also known from the prior art.

A relevant example is provided by document KR20130001629U, which discloses two solutions for facilitating the opening of the lid of the top case. A first solution comprises a hinge provided with a torsion spring and a second solution comprises a piston. In the first solution, the torsion spring is mounted coaxially to the hinge. The first solution has the drawback that the torsion spring must be very large and stiff to apply a sufficient torque to open the lid. This aspect can create very high concentrations of forces at the contact points between the spring and the lid, which can lead to deformation or rupture of the latter. Moreover, this first solution does not allow varying the strength of the hinge opening torque according to the excursion of the lid. The second solution with the piston, on the other hand, has the drawback that the piston is highly bulky and reduces the housing space or access thereto. Since the housing space in a motorcycle is always small due to the size of the vehicle, the space required for the movement and excursion of the piston is a space lost inside the top case. WO 2022/167879 A1 discloses the features of the preamble of claim 1.

### SUMMARY

It is a first object of the present invention to solve the drawbacks of the known solutions by a motorcycle top case, comprising a lower half-shell and an upper half-shell. The lower half-shell is connectable to a motorcycle. The upper half-shell is hinged to the lower half-shell and is configured to move between a closed position and an open position. In the closed position, the lower half-shell and the upper half-shell form a storage compartment. In the open position, the upper half-shell is spaced apart from the lower half-shell to allow access to the storage compartment. The top case further comprises a lifting device configured to apply an opening torque with decreasing strength to the upper half-shell. The top case thus devised allows for an easy or automatic opening of the upper half-shell minimizing the dimensions inside the top case and minimizing the risk of jamming of the lifting device. Moreover, the top case thus devised allows for a less abrupt opening of the upper half-shell. In an alternative embodiment, the lifting device can be configured to apply an opening torque with decreasing strength to the lower half-shell.

The lifting device comprises an arm hinged to the lower half-shell and a spring element configured to push the arm towards the upper half-shell. This embodiment allows the upper half-shell to be pushed by the arm, which in turn is pushed by the elastic element. The arm allows applying the pushing force of the spring element at a more suitable point of the upper half-shell to carry out the opening more efficiently and avoid tension concentrations on the upper half-shell. In an alternative embodiment, the lifting device can comprise an arm hinged to the upper half-shell and a spring element configured to push the arm towards the lower half-shell.

The distal end of the arm is configured to slide on an inner surface of the upper half-shell or, in the case of a not claimed alternative embodiment, on an inner surface of the lower half-shell. The rubbing allows friction to be formed between the arm and upper half-shell which dampens the opening torque of the top case.

In particular, the distal end of the arm can comprise one or more rollers configured to roll on the inner surface of the upper half-shell. The rollers allow reducing friction between arm and upper half-shell, allowing the selection of smaller and hence more cost-effective spring elements.

Advantageously, the upper half-shell can comprise a thickening where the distal end of the arm slides over the inner surface of the upper half-shell. The thrust of the lever thus discharges onto a thicker portion, which avoids cracks in the material of the upper half-shell and facilitates the distribution of forces thereon.

Preferably, the elastic element can comprise a torsion spring. This type of elastic element is cost-effective and efficient. There can be one or two torsion springs. If there is one, the spring comprises a large number of coils so that the elasticity thereof will last longer over time.

Advantageously, the lifting device can comprise a support connected to the lower half-shell, and the arm can be connected to the lower half-shell by means of the support. This support allows discharging the forces created by the lifting device in a distributed manner onto the lower half-shell, avoiding stress concentrations at specific points of the lower half-shell.

In particular, the support can be connected to the bottom of the lower half-shell. The lifting device is thus anchored to the strongest element of the top case, i.e., the bottom of the half-shell, where the connection interface with the motorcycle is normally present.

Preferably, the arm hinging axis to the lower half-shell can be offset with respect to a hinging axis of the upper half-shell to the lower half-shell. This offset allows a variation in the arm of the opening torque and thus a gradual reduction in the strength thereof.

Moreover, the top case can comprise an end-of-stroke device to limit an opening angle of the upper half-shell with respect to the lower half-shell. This end-of-stroke device allows limiting the excursion of the upper half-shell and avoiding damage due to the two half-shells striking each other.

### DESCRIPTION OF THE DRAWINGS

In the drawings:
Figure 1 shows an axonometric view of a top case according to the present invention with the upper half-shell in the open position;
Figure 2 shows a nearly frontal view of a top case according to the present invention with the upper half-shell in the open position;
Figures 3A, 3B, and 3C show sectional side views of a top case according to the present invention with the upper half-shell in the partially open- and fully open-closed positions, respectively;
Figures 4A, 4B, and 4C show detailed views close to the hinge points of the lower half-shell to the arm and upper half-shell, respectively, in the operating positions in Figures 3A-3C;
Figure 5 shows an axonometric view of a lifting device;
Figure 6 shows an axonometric view of the lifting device in Figure 5, in which the arm is depicted partially in phantom;
Figure 7 shows an axonometric view of the top case according to the present invention, in which some elements are shown partially in phantom to show the internal architecture of the end-of-stroke device of the top case;
Figure 8 shows a motorcycle provided with a top case according to the present invention.

### DETAILED DESCRIPTION

The following description of one or more embodiments of the invention refers to the accompanying drawings. The same reference numerals in the drawings identify identical or similar elements. The subject of the invention is defined by the appended claims.

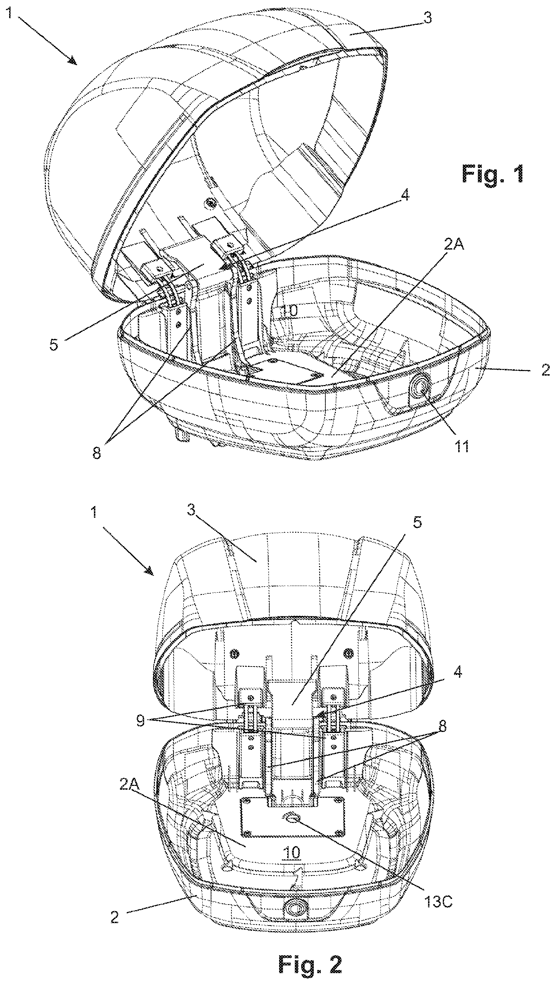

With reference to Figure 1, the present invention provides a top case 1, provided with a fixed part to be anchored to a motorcycle 100, i.e., the lower half-shell 2, and a movable part, i.e., the upper half-shell 3. The lower half-shell 2 is thus the base of the top case 1 and the upper half-shell 3 is thus the lid of the top case 1.

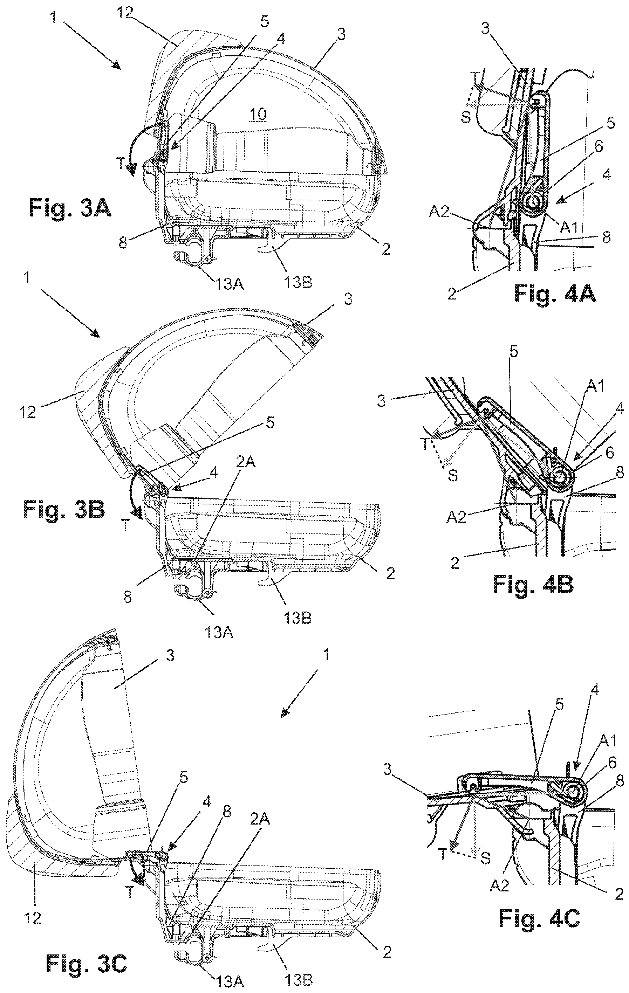

The upper half-shell 3 is hinged to the lower half-shell 2 at one or more points by means of cylindrical joints. In the case of multiple joints, the revolution axes coincide. The hinging axis A2 of the upper half-shell 3 to the lower half-shell 2 is shown in detail in Figures 4A, 4B and 4C.

The upper half-shell 3 thus rotates about the hinging axis A2 to move from a closed position, shown in Figure 3A, to a partial opening position, shown in Figure 3B, to a fully open position, shown in Figure 3C.

When the upper half-shell 3 is in the closed position, an impermeable storage compartment 10 is obtained. The storage compartment 10 is impermeable due to the at least partial complementarity of the edges of the half-shells 2,3.

The upper half-shell 3 is pushed to an open position by the lifting device 4, shown in Figures 1-7.

The lifting device 4 comprises an arm 5 hinged to the lower half-shell 2. In particular, the arm 5 is hinged to the lower half-shell 2 by means of a support 8, but the latter element can be optional. The arm 5 rotates about a hinging axis A1, shown in Figures 4A, 4B and 4C. In a not claimed embodiment (not shown), the arm 5 is hinged to the upper half-shell 3.

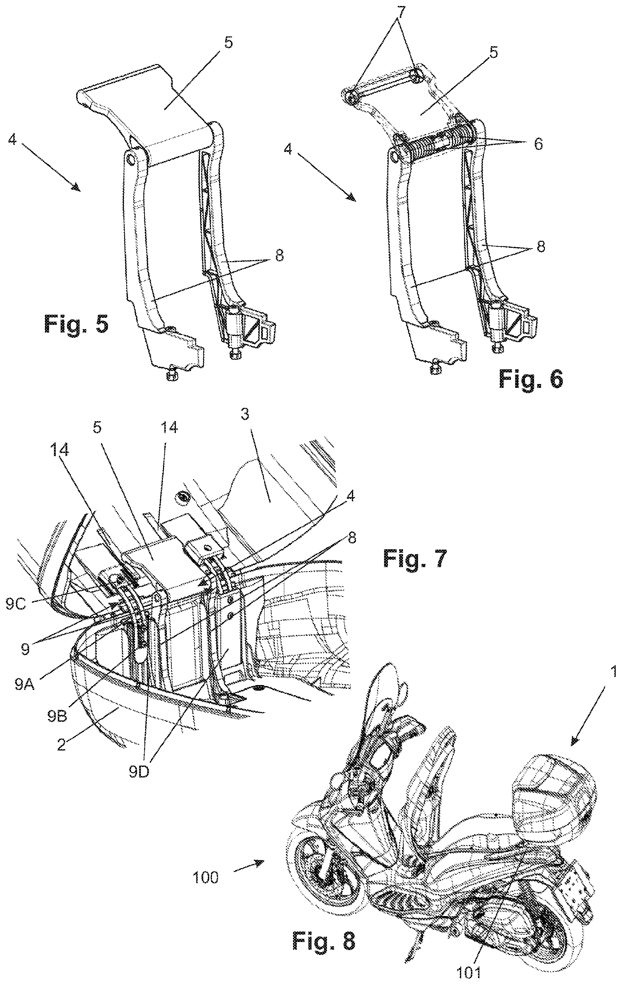

The lifting device 4 further comprises a spring element 6, which in this embodiment is a torsion spring 6, as better shown in Figure 6. This spring 6 creates a nearly constant torque S which rotates the arm 5 with respect to the support 8 and thus to the lower half-shell 2, as diagrammatically shown in Figures 4A, 4B and 4C.

The arm 5 is pushed by spring 6 to rotate towards the upper half-shell 3 and contacts an inner surface of the upper half-shell 3.

The contact point of arm 5 with the upper half-shell 3 is not fixed. In particular, the distal end of arm 5, i.e., the tip thereof farthest from the hinging axis A1 thereof, moves by rubbing against the inner surface of the upper half-shell 3.

In order to reduce the friction resulting from this rubbing, the arm 5 can comprise one or more rollers 7 as shown in Figure 6, arranged close to the distal end of arm 5.

Therefore, the torsional torque S of spring 6 is transmitted to the arm 5 and from the latter, by means of the distal end thereof, with or without rollers 7, to the upper half-shell 3, as shown in greater detail in Figures 4A, 4B and 4C. The torsional torque S of spring 6 is transmitted to the upper half-shell 3 and creates an opening torque T of the upper half-shell 3 which gradually decreases in strength as the upper half-shell 3 moves from the closed position, Figure 4A, to the fully open position, Figure 4C. The opening torque T decreases due to the decrease of its arm, i.e., the distance between the contact point of the distal end of the arm 5 and the inner surface of the upper half-shell 3.

This decrease in the arm of the opening torque T is achieved by the offset of the hinge axes A1 and A2, as shown in Figures 4A, 4B and 4C. In particular, the axis A1 of arm 5 is located higher and in a more internal position than the axis A2 of the upper half-shell 3.

The shortening of the arm of the opening torque T is not the only factor that contributes to a progressively smaller opening thrust of the upper half-shell 3. The friction between the distal end of the arm 5 and the inner surface of the upper half-shell 3 also contributes to this damping.

In order to avoid stress concentrations on the upper half-shell 3, the thickness thereof is increased at the contact line which is formed between the rollers 7 or the distal end of the arm 5. Such thickening(s) 14 allows/allow a better discharging of the thrust forces of the arm 5.

In a preferred variant, not shown, the thickening 14 has no constant thickness, so as to emphasize the progressive slowing down, e.g., by means of an inclined or curvilinear profile.

In order to avoid stress concentrations on the lower half-shell 2, the arm 5 is hinged to a support 8, which is connected to the bottom 2A of the lower half-shell 2. The forces are thus discharged onto the bottom 2A and only minimally onto the sides of the lower half-shell 2.

As shown in Figure 7, the top case 1 further comprises an end-of-stroke device 9, which allows avoiding the upper half-shell 3 from opening until it strikes against the lower one. The end-of-stroke device 9 comprises an elongated element 9A which is connected at one end to the upper half-shell 3 in point 9C. The opposite end of the elongated element 9A slides into a shell 9D. The elongated element 9A has an inner slot, also elongated in shape, in which an element 9B fixed to the lower half-shell 2 slides. When the element 9B reaches the lower end of the elongated slot, an end of stroke occurs and the elongated element 9A cannot slide further into the shell 9D. The sliding of the elongated element 9A inside the shell 9D forms friction which dampens the movement of the upper half-shell 3 with respect to the lower half-shell 2.

The top case 1 further comprises a lock 11 to lock the opening movement of the upper half-shell 3 and secure the storage compartment 10.

The top case 1 can further comprise a cushion 12 acting as a backrest for the possible passenger of the motorcycle 100.

The top case 1 can be connected to the motorcycle 1 directly at the luggage rack 101 of the vehicle, as shown in Figure 8, or by means of a counter-plate connected to the motorcycle 100 (not shown).

The connection between top case 1 and motorcycle 100 can be achieved by a coupling system comprising a fixed anchoring element 13B, a movable anchoring element 13A, and an actuator of the movable anchoring element 13A. Further details of this anchoring system are described in patent document EP3849889A1.

## Claims

1. Top case (1) for motorcycle (100), comprising:
- a lower half-shell (2) connectable to a motorcycle (100);
- an upper half-shell (3) hinged to the lower half-shell (2) configured to move between a closed position, wherein the lower half-shell (2) and the upper half-shell (3) form a storage compartment (10), and an open position, wherein the upper half-shell (3) is in part spaced from the lower half-shell (2);
- a lifting device (4) configured to exert on the upper half-shell (3) an opening torque (T) with decreasing intensity; wherein the lifting device (4) comprises an arm (5) hinged to the lower half-shell (2) and an elastic element (6) configured to push the arm (5) towards the upper half-shell (3);
**characterized in that**
the distal end of the arm (5) is configured to slide over an internal surface of the upper half-shell (3).

2. Top case (1) for motorcycle (100) according to claim 1, wherein the distal end of the arm (8) comprises one or more rollers (7) configured to roll over the inner surface of the upper half-shell (3).

3. Top case (1) for motorcycle (100) according to claim 1 or 2, wherein the upper half-shell (3) comprises a thickening (14) where the distal end of the arm (5) slides on the inner surface of the upper half-shell (3).

4. Top case (1) for motorcycle (100) according to any one of preceding claims, wherein the elastic element (6) comprises a torsion spring (6).

5. Top case (1) for motorcycle (100) according to any one of preceding claims, wherein the lifting device (4) comprises a support (8) connected to the lower half-shell (2) and the arm (5) is connected to the lower half-shell (2) through the support (8).

6. Top case (1) for motorcycle (100) according to claim 5, wherein the support (8) is connected to the bottom (2A) of the lower half-shell (2).

7. Top case (1) for motorcycle (100) according to any one of preceding claims, in which the hinging axis (A1) of the arm (5) to the lower half-shell (2) is offset with respect to an axis hinging (A2) of the upper half-shell (3) to the lower half-shell (2).

8. Top case (1) for motorcycle (100) according to any one of the preceding claims, further comprising an end-of-stroke device (9) for limiting an opening angle of the upper half-shell (3) with respect to the lower half-shell (2).

## Patentansprüche

1. Oberes Etui (1) für ein Motorrad (100), umfassend:
- eine untere Halbschale (2), die mit einem Motorrad (100) verbunden werden kann;
- eine obere Halbschale (3), die an der unteren Halbschale (2) geschwenkt wird, dazu konfiguriert ist, sich zwischen einer geschlossenen Stellung, in der die untere Halbschale (2) und die obere Halbschale (3) ein Aufbewahrungsfach (10) bilden, und einer offenen Stellung zu bewegen, in der die obere Halbschale (3) teilweise von der unteren Halbschale (2) beabstandet ist;
- eine Hubvorrichtung (4), die dazu konfiguriert ist, auf die obere Halbschale (3) ein Öffnungsdrehmoment (T) mit abnehmender Intensität auszuüben; wobei die Hubvorrichtung (4) einen Arm (5) umfasst, der an der unteren Halbschale (2) geschwenkt wird und ein elastisches Element (6), das dazu konfiguriert ist, den Arm (5) zu der oberen Halbschale (3) zu drücken;
**dadurch gekennzeichnet, dass**
das distale Ende des Arms (5) dazu konfiguriert ist, auf einer Innenfläche der oberen Halbschale (3) zu gleiten.

2. Oberes Etui (1) für ein Motorrad (100) nach Anspruch 1, wobei das distale Ende des Arms (8) ein oder mehrere Rollen (7) umfasst, die dazu konfiguriert sind, auf der Innenfläche der oberen Halbschale (3) zu rollen.

3. Oberes Etui (1) für ein Motorrad (100) nach Anspruch 1 oder 2, wobei die obere Halbschale (3) eine Verdickung (14) aufweist, wobei das distale Ende des Arms (5) auf der Innenfläche der oberen Halbschale (3) gleitet.

4. Oberes Etui (1) für ein Motorrad (100) nach einem der vorhergehenden Ansprüche, wobei das elastische Element (6) eine Torsionsfeder (6) umfasst.

5. Oberes Etui (1) für ein Motorrad (100) nach einem der vorhergehenden Ansprüche, wobei die Hubvorrichtung (4) eine Stütze (8) umfasst, die mit der unteren Halbschale (2) verbunden ist, und wobei der Arm (5) über die Stütze (8) mit der unteren Halbschale (2) verbunden ist.

6. Oberes Etui (1) für ein Motorrad (100) nach Anspruch 5, wobei die Stütze (8) mit dem Boden (2A) der unteren Halbschale (2) verbunden ist.

7. Oberes Etui (1) für ein Motorrad (100) nach einem der vorhergehenden Ansprüche, wobei die Schwenkachse (A1) des Arms (5) an der unteren Halbschale (2) in Bezug auf eine Achsenschwenkung (A2) der oberen Halbschale (3) an der unteren Halbschale (2) versetzt wird.

8. Oberes Etui (1) für ein Motorrad (100) nach einem der vorhergehenden Ansprüche, ferner umfassend eine Endanschlagsvorrichtung (9) zur Begrenzung eines Öffnungswinkels der oberen Halbschale (3) in Bezug auf die untere Halbschale (2).

## Revendications

1. Top-case (1) pour motocyclette (100), comprenant :
une demi-coque inférieure (2) pouvant être connectée à une motocyclette (100) ;
une demi-coque supérieure (3) articulée à la demi-coque inférieure (2), configurée pour se déplacer entre une position fermée, dans laquelle la demi-coque inférieure (2) et la demi-coque supérieure (3) forment un compartiment de rangement (10), et une position ouverte, dans laquelle la demi-coque supérieure (3) est en partie espacée de la demi-coque inférieure (2) ;
un dispositif de levage (4) configuré pour exercer sur la demi-coque supérieure (3) un couple d'ouverture (T) d'intensité décroissante ; dans lequel le dispositif de levage (4) comprend un bras (5) articulé à la demi-coque inférieure (2) et un élément élastique (6) configuré pour pousser le bras (5) vers la demi-coque supérieure (3) ;
**caractérisé en ce que**
l'extrémité distale du bras (5) est configurée pour coulisser sur une surface interne de la demi-coque supérieure (3).

2. Top-case (1) pour motocyclette (100) selon la revendication 1, dans lequel l'extrémité distale du bras (8) comprend un ou plusieurs galets (7) configurés pour rouler sur la surface interne de la demi-coque supérieure (3).

3. Top-case (1) pour motocyclette (100) selon la revendication 1 ou 2, dans lequel la demi-coque supérieure (3) comprend un épaississement (14) où l'extrémité distale du bras (5) coulisse sur la surface interne de la demi-coque supérieure (3).

4. Top-case (1) pour motocyclette (100) selon l'une quelconque des revendications précédentes, dans lequel l'élément élastique (6) comprend un ressort de torsion (6).

5. Top-case (1) pour motocyclette (100) selon l'une quelconque des revendications précédentes, dans lequel le dispositif de levage (4) comprend un support (8) connecté à la demi-coque inférieure (2) et le bras (5) est connecté à la demi-coque inférieure (2) par l'intermédiaire du support (8).

6. Top-case (1) pour motocyclette (100) selon la revendication 5, dans lequel le support (8) est connecté au fond (2A) de la demi-coque inférieure (2).

7. Top-case (1) pour motocyclette (100) selon l'une quelconque des revendications précédentes, dans lequel l'axe d'articulation (A1) du bras (5) à la demi-coque inférieure (2) est décalé par rapport à un axe d'articulation (A2) de la demi-coque supérieure (3) à la demi-coque inférieure (2).

8. Top-case (1) pour motocyclette (100) selon l'une quelconque des revendications précédentes, comprenant en outre un dispositif de fin de course (9) pour limiter un angle d'ouverture de la demi-coque supérieure (3) par rapport à la demi-coque inférieure (2).
